# EUROPEAN PATENT SPECIFICATION

(11) **EP 3 547 759 B1**
(45) Date of publication and mention of the grant of the patent: **27.01.2021**
(21) Application number: 16924828.3
(22) Date of filing: 20.12.2016
(51) Int. Cl.: H04W 48/10, H04W 84/12

(54) **METHOD, ACCESS POINT AND WIRELESS LOCAL AREA NETWORK SYSTEM FOR ESTABLISHING A WIRELESS LOCAL AREA NETWORK CONNECTION BETWEEN AN ACCESS POINT AND A STATION**
VERFAHREN, ZUGANGSPUNKT UND DRAHTLOSES LOKALES NETZWERKSYSTEM ZUR HERSTELLUNG EINER DRAHTLOSEN LOKALEN NETZWERKVERBINDUNG ZWISCHEN EINEM ZUGANGSPUNKT UND EINER STATION
PROCÉDÉ, POINT D'ACCÈS ET SYSTÈME DE RÉSEAU LOCAL SANS FIL POUR ÉTABLIR UNE CONNEXION DE RÉSEAU LOCAL SANS FIL ENTRE UN POINT D'ACCÈS ET UNE STATION

(43) Date of publication of application: 02.10.2019
(73) Proprietor: Huawei Technologies Co., Ltd., Longgang District Shenzhen, Guangdong 518129 (CN)
(72) Inventor: ZHANG, Ke, Shenzhen Guangdong 518129 (CN)
(74) Representative: Goddar, Heinz J.
(86) International application number: PCT/CN2016/110969
(87) International publication number: WO 2018/112727

(56) References cited:
- EP-A1- 2 665 237
- WO-A1-2016/058166
- WO-A1-2016/058166
- CN-A- 103 096 426
- CN-A- 103 124 422
- CN-A- 103 916 856
- CN-A- 104 010 309
- US-A1- 2009 271 709
- Wi-Fi Alliance: "Wi-Fi Simple Configuration Technical Specification, Version 2.0.5", , 4 August 2014 (2014-08-04), XP055280052, Retrieved from the Internet: URL:https://www.wi-fi.org/download.php?fil e=/sites/default/files/private/Wi-Fi_Simpl e_Configuration_Technical_Specification_v2 .0.5.pdf [retrieved on 2016-06-13]

## Description

### TECHNICAL FIELD

Embodiments of the present invention relate to the field of Wireless Fidelity technologies, and in particular, to a method, an access point and a wireless local area network system comprising an access point and a first station for establishing a wireless local area network connection.

### BACKGROUND

Because of features such as high flexibility and high mobility, a wireless local area network (WLAN) is more widely used, especially a Wireless Fidelity (Wireless Fidelity, Wi-Fi) technology.

To ensure security of the Wi-Fi technology, it is generally required to enter a password manually to complete Wi-Fi access configuration. Because password cracking is increasingly sophisticated, a more complex password that is more difficult to crack indicates higher security. A more complex password also indicates a more complex operation of a user, and it is necessary to ensure that the password is memorized correctly and entered correctly. Obviously, user experience is worse.

To simplify a Wi-Fi access configuration process, the Wi-Fi Alliance proposes a simple Wi-Fi configuration method, which is also referred to as Wi-Fi Simple Configuration (Wi-Fi Simple Configuration, WSC). The WSC defines an enrollee (Enrollee) and a registrar (Registrar). The registrar may be integrated into an access point (Access Point, AP) entity or may be independent of an AP entity to form an independent functional module. To join a trusted network (to establish a connection to the AP), the enrollee needs to trigger the WSC, to register with the registrar by using a registrar protocol. The Wi-Fi Alliance mainly defines two WSC triggering manners: triggering by using a personal identification number (personal identification number, PIN) and triggering through push button configuration (Push Button Configuration, PBC). The triggering by using a personal identification number means that a PIN code is generated at a registrar end and triggering is completed after the enrollee enters the PIN code. The triggering through push button configuration means that triggering is completed after a physical button or a virtual button is simultaneously pushed at the registrar end and the enrollee end. However, the foregoing manners are still not convenient. Consequently, user experience is poor. WO 2016/058166 A1 discloses a method for triggering registration machine protocol interaction. The method comprises: receiving, by an access point, a detection request sent by at least one site, the detection request including an identifier of the access point; determining, by the access point, a first station point from the at least one station point according to the detection request sent by the at least one station point, an identifier included in the detection request sent by the first station point being matched with the identifier of the access point, and a signal strength of the detection request sent by the first station point being greater than a signal strength threshold value; and automatically triggering, by the access point, registration machine protocol interaction with the first station point.

Wi-Fi Alliance, "Wi-Fi Simple Configuration Technical Specification, Version 2.0.5", (20140804) discloses Wi-Fi Simple Configuration Technical specification. The goal of this specification is to provide users with a method that their wireless networks can be easily protected against unauthorized access and disclosure of private information.

### SUMMARY

The present invention is defined by the subject-matter of independent claims 1, 4 and 7 defining a method, an access point and a wireless local area network system respectively.

Preferred embodiments are set out in the dependent claims. In the embodiments of the present invention, when an access point and a station establish a wireless local area network connection, the access point indicates, by using a beacon frame, support for automatic triggering of establishing a wireless local area network connection, so as to implement automatic triggering of a registrar protocol between the station and the access point, thereby improving user experience of wireless local area network access configuration.

According to a first aspect, an embodiment of the present invention provides a method for establishing a wireless local area network connection. An access point locally stores an identifier of at least one station, and the method specifically includes the following steps: The access point sends a beacon frame, where the beacon frame indicates that the access point supports automatic triggering of establishing a wireless local area network connection, so that a station triggers establishment of a wireless local area network connection after receiving the beacon frame; the access point receives a probe request frame sent by the station, where the probe request frame carries an identifier of the station, and the probe request frame is used to request to establish a wireless local area network connection; and when the identifier of the at least one station that is locally stored includes the identifier of the station carried in the probe request frame, the access point establishes, according to a registrar protocol of Wi-Fi Simple Configuration WSC, a wireless local area network connection to the station corresponding to the probe request frame. In this embodiment of the present invention, based on a STA identifier pre-stored by the access point, identity confirmation is completed by using an extended IE, so as to implement automatic triggering of a WSC process.

In an optional implementation, before the establishing a wireless local area network connection between the access point and the station according to a registrar protocol of Wi-Fi Simple Configuration WSC, the method further includes: sending, by the access point, a probe response frame to the station, where the probe response frame carries the station identifier, and the probe response frame is used to instruct the station to trigger establishment of a wireless local area network connection to the access point according to a registrar protocol of Wi-Fi Simple Configuration, WSC. The station identifier carried in the probe response frame may be used by the station to attempt to authenticate an identity of the access point. When the station identifier carried in the probe response frame received by the station is the identifier of the station, it is considered that the access point is valid, and establishment of the wireless local area network connection to the station is triggered according to the registrar protocol of Wi-Fi Simple Configuration WSC. According to this embodiment of the present invention, two-way identity authentication between the station and the access point can be implemented. In this way, security is higher, and user experience is better.

In another optional implementation, the beacon frame includes a WSC information element (Information Element, IE). The WSC IE includes the station identifier, and the WSC IE indicates that the access point supports automatic triggering of establishing a wireless local area network conncction. The WSC IE may further include IE version information of WSC automatically triggered by the access point, a MAC address of a WSC automatic triggering station, vendor information, and the like. According to this embodiment of the present invention, the following can be implemented.

According to a second aspect, an embodiment of the present invention provides an access point for establishing a wireless local area network connection. The access point locally stores a station identifier, and the access point specifically includes: a sending unit, configured to send a beacon frame, where the beacon frame indicates that the access point supports automatic triggering of establishing a wireless local area network connection, so that the station triggers establishment of a wireless local area network connection after receiving the beacon frame; a receiving unit, configured to receive a probe request frame sent by the station, where the probe request frame carries an identifier of the station, and the probe request frame is used to request to establish a wireless local area network connection; and a connection establishment unit, configured to: when the locally stored station identifier includes the identifier of the station carried in the probe request frame, establish a wireless local area network connection to the station according to a registrar protocol of Wi-Fi Simple Configuration WSC.

In an optional implementation, the sending unit is further configured to: when the identifier of the at least one station comprises the identifier of the first station and before establishing by the connection establishment unit (603) a wireless local area network connection to the first station according to a registrar protocol of Wi-Fi Simple Configuration, WSC, send a probe response frame to the station, where the probe response frame carries the station identifier, and the probe response frame is used to instruct the station to trigger establishment of a wireless local area network connection to the access point according to a registrar protocol of Wi-Fi Simple Configuration, WSC.

In another optional implementation, the beacon frame includes a WSC information element IE. The WSC IE includes the station identifier, and the WSC IE indicates that the access point supports automatic triggering of establishing a wireless local area network connection.

According to a third aspect, an embodiment of the present invention provides a wireless local area network system comprising an access point and a first station, wherein the access point locally stores an identifier of at least one station; the access point is configured to send a beacon frame, wherein the beacon frame indicates that the access point supports automatic triggering of establishing a wireless local area network connection; the first station is configured to receive the beacon frame, and when determining, based on the indication information carried in the beacon frame, that the access point supports automatic triggering of establishing a wireless local area network connection, send a probe request frame to the access point, wherein the probe request frame carries an identifier of the first station, and the probe request frame is used to request to establish a wireless local area network connection; the access point is configured to receive the probe request frame, determine whether the identifier of the at least one station comprises the identifier of the first station carried in the probe request frame, and if the identifier of the at least one station comprises the identifier of the first station carried in the probe request frame, establish a wireless local area network connection to the first station according to a registrar protocol of Wi-Fi Simple Configuration, WSC.

### BRIEF DESCRIPTION OF DRAWINGS

FIG. 1 is a schematic diagram of a network architecture of a wireless local area network;
FIG. 2 is a schematic structural diagram of a WSC automatic triggering IE;
FIG. 3 is a signaling interaction diagram of a method for establishing a wireless local area network connection according to an embodiment of the present invention;
FIG. 4 is a signaling interaction diagram of another method for establishing a wireless local area network connection according to an embodiment of the present invention;
FIG. 5 is a signaling interaction diagram of an example according to an embodiment of the present invention;
FIG. 6 is a schematic structural diagram of an apparatus for establishing a wireless local area network connection according to an embodiment of the present invention;
FIG. 7 is a schematic structural diagram of another apparatus for establishing a wireless local area network connection according to an embodiment of the present invention;
FIG. 8 is a schematic structural diagram of an access point according to an embodiment of the present invention; and
FIG. 9 is a schematic structural diagram of a station according to an embodiment of the present invention.

### DESCRIPTION OF EMBODIMENTS

The present invention discloses a method and an access point for establishing a wireless local area network connection, and a system. In the embodiments of the present invention, when an access point establishes a wireless local area network connection to a station, the access point indicates, by using a beacon frame, support for automatic triggering of establishing a wireless local area network connection. The access point sends the beacon frame periodically. The station may receive the beacon frame. The station determines, based on an indication of the received beacon frame, whether the access point that sends the beacon frame supports automatic triggering of establishing a wireless local area network connection. The station sends a probe request frame to the access point that supports automatic triggering of establishing a wireless local area network connection, so as to trigger a registrar protocol and establish a wireless local area network connection between the station and the access point. In this process, the access point may perform identity authentication on the station. Specifically, the access point may pre-store a station identifier, the station adds an identifier of the station to the probe request frame that is to be sent to the access point, and the access point can implement identity authentication on the station based on a comparison between the identifier of the station carried in the probe request frame and the locally pre-stored station identifier. The station may also perform identity authentication on the access point. Specifically, the access point may send the station a probe response frame that carries the locally stored station identifier, and the station determines whether the station identifier carried in the probe response frame is the identifier of the station, so as to implement identity authentication on the access point. According to the embodiments of the present invention, automatic triggering of the registrar protocol between the station and the access point can be implemented, thereby improving user experience of Wi-Fi access configuration.

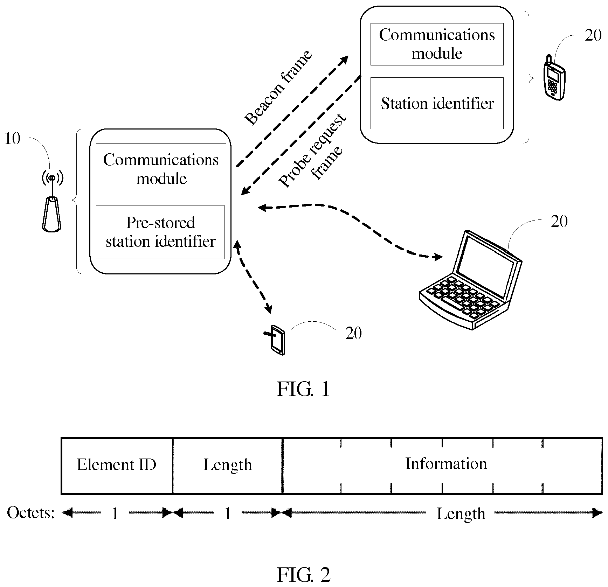

FIG. 1 is a schematic diagram of a network architecture of a wireless local area network. As shown in FIG. 1, the wireless local area network includes an AP 10 and at least one STA 20. The STA 20 includes a communications module, and the STA 20 has a station identifier. The AP 10 includes a communications module, and the AP 10 pre-stores a station identifier.

The AP 10 may include a wireless router, a wireless repeater, a wireless network interface card, a mobile phone, and the like.

The AP 10 may add and extend an IE (information element) by using a management frame, to implement automatic WSC triggering configuration function declaration, configuration function version declaration, vendor information declaration, device ID declaration, a docking station selection protocol, and the like. The AP may add and extend an IE by using at least the following management frames: a beacon frame (Beacon), a probe response frame (Probe Response), an authentication response frame (Auth Response) (optional), an association response frame (Association Response) (optional), and the like.

The STA may add and extend one or more IEs (information element) by using a management frame, to implement automatic WSC triggering configuration function declaration, configuration function version declaration, vendor information declaration, device ID declaration, a docking AP selection protocol, and the like. The STA may add and extend an IE by using at least the following management frames: a probe request frame (Probe Request), an authentication request frame (Auth Request) (nonessential frame), and an association request frame (Association Request) (nonessential frame).

The AP and the STA check each other's device ID declaration information to implement an automatic triggering protocol of a WSC process.

It should be noted that, as shown in FIG. 2, a defined WSC automatic triggering IE complies with an IE definition format specified in the standard IEEE 802.11: an element identity (Element ID): a reserved (Reserved) ID that is not used in IEEE 802.11 may be selected, for example, 120.

Length (Length): a length of the IE. Information (Information) part: [VERSION] [DEVICE ID] [MAC ADDR] [VENDROR STRING]. Version (VERSION): a WSC automatic triggering IE version. Device identity (DEVICE ID): a device ID of a STA that allows a WSC automatic triggering process. MAC address (MAC ADDR): a network address of a WSC automatic triggering target device. Vendor string (VENDOR STRING). The device ID is a station identifier, and the device ID may be a device sequence number, a MAC address, a product identifier, or other information that can identify the station. Optionally, an IE length may be 128 bytes, and a plurality of IEs may be extended.

The following further describes the present invention with reference to the accompanying drawings and specific embodiments.

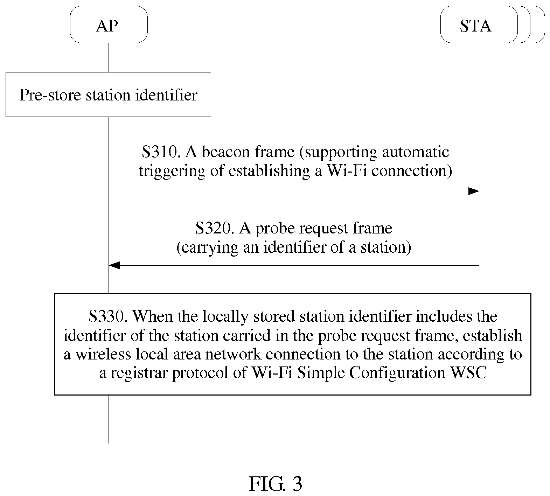

FIG. 3 is a signaling interaction diagram of a method for establishing a wireless local area network connection according to an embodiment of the present invention. As shown in FIG. 3, an access point pre-determines an identifier of at least one to-be-accessed station, and locally stores the identifier. The station identifier locally stored by the access point may include at least the following manners.
Manner 1: A device, such as a PC or a mobile phone that manages an access point may manage the access point. Specifically, the device managing the access point may access the access point by using an IP address of the access point, and sends the station identifier to the access point by using the IP address of the access point, so that the access point locally stores the station identifier, for example, the access point may generate an array, a linked list, a database, or the like to store the station identifier. Optionally, the station identifier may be manually entered, and a communication channel is directly established between the mobile phone and the access point, for example, the device identifier is sent by using a socket of a fixed port.
Manner 2: The access point may provide a user operation interface, and receive, by using the user operation interface, the station identifier entered by a user.
Manner 3: A QR code may be generated based on the station identifier, and the access point or the device managing the access point may scan the QR code, so that the access point determines the station identifier, and locally stores the station identifier.

The solution specifically further includes the following steps.

S310. The access point sends a beacon frame, where the beacon frame indicates that the access point supports automatic triggering of establishing a wireless local area network connection.

The access point may send the beacon frame in a periodic broadcast manner, where the beacon frame carries indication information indicating support for automatic triggering of establishing a wireless local area network connection.

S320. A station sends a probe request frame to the access point, where the probe request frame carries an identifier of the station, and the probe request frame is used to request to establish a wireless local area network connection.

The station may receive, in a manner such as scanning, the beacon frame sent by the access point, and determine, based on the indication information carried in the beacon frame, whether the access point supports automatic triggering of establishing a wireless local area network connection.

When the access point supports automatic triggering of establishing a wireless local area network connection, the station sends the probe request frame to the access point.

When performing scanning, the station may receive beacon frames sent by a plurality of access points. The station selects, based on indications of the beacon frames, an access point that supports automatic triggering of establishing a wireless local area network connection, and sends the probe request frame to the selected access point.

When there are a plurality of access points that support automatic triggering of establishing a wireless local area network connection in the plurality of access points corresponding to the plurality of beacon frames received by the station, an access point may be selected based on signal strength.

There may be only one access point that locally stores the station identifier, but the station receives beacon frames sent by a plurality of access points that support automatic triggering of establishing a wireless local area network connection. In this case, the probe request frame may be sent to the access points that support automatic triggering of establishing a wireless local area network connection one by one in an exhaustive manner until the probe request frame is correctly sent to the access point that locally stores the station identifier.

S330. When the locally stored station identifier includes the identifier of the station carried in the probe request frame, establish a wireless local area network connection to the station according to a registrar protocol of Wi-Fi Simple Configuration WSC.

After receiving the probe request frame sent by the station, the access point may determine, based on the identifier of the station carried in the probe request frame, whether a same station identifier is stored locally. When the same station identifier is not found, the access point may discard the probe request frame, or the access point returns a probe response frame to the station. The probe response frame indicates that authentication fails, and the authentication failure indicates that the access point does not store the identifier of the station locally.

When the access point finds the same station identifier locally, the access point may send a probe response frame to the station, and the probe response frame instructs the station to perform WSC negotiation with the access point to establish a wireless local area network connection.

The access point may receive probe request frames sent by a plurality of stations, and the access point locally stores identifiers of the plurality of stations. In this case, the access point may respectively send different probe response frames to the plurality of stations, and one of the plurality of different probe response frames carries one of the identifiers of the plurality of stations, so that the access point separately establishes a wireless local area network connection to the plurality of stations. The plurality of different probe response frames may be successively sent. Alternatively, the access point sends a same probe response frame to the plurality of stations, where the probe response frame carries the identifiers of the plurality of stations.

According to this embodiment of the present invention, based on a STA identifier pre-stored by the access point, identity confirmation is completed by using an extended IE, so as to implement automatic triggering of a WSC process. This embodiment of the present invention may be widely applied to all Wi-Fi products with a low power consumption requirement, so as to improve a speed of information transmission after waking up from a sleep mode, and improve product experience.

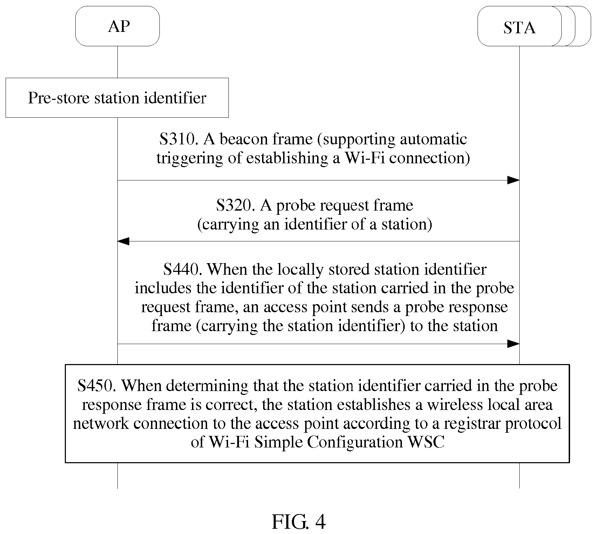

In an example, as shown in FIG. 4, the station may further attempt to authenticate an identity of the access point. In this case, before the wireless local area network connection is established to the station according to the registrar protocol of Wi-Fi Simple Configuration WSC, the method further includes the following steps.

S440. When the locally stored station identifier includes the identifier of the station carried in the probe request frame, the access point sends a probe response frame to the station, where the probe response frame carries the station identifier, and the probe response frame is used to instruct the station to trigger establishment of a wireless local area network connection.

S450. When determining that the station identifier carried in the probe response frame is correct, the station establishes the wireless local area network connection to the access point according to the registrar protocol of Wi-Fi Simple Configuration WSC.

The following further describes this embodiment of the present invention with reference to a specific example.

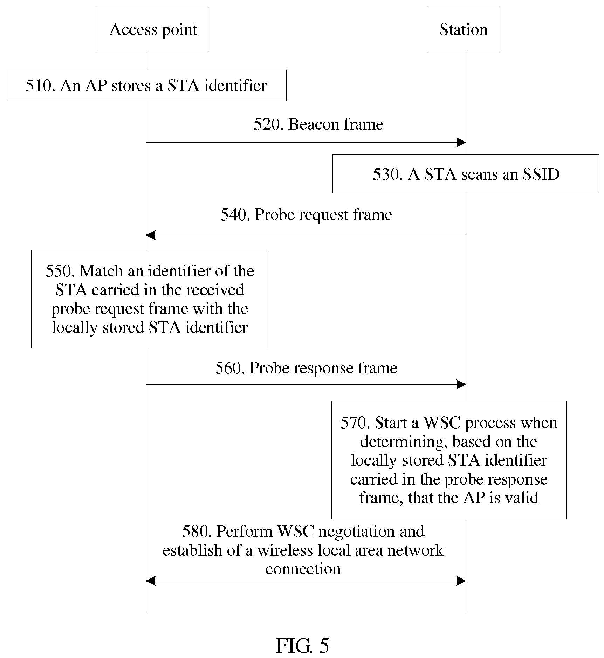

FIG. 5 is a signaling interaction diagram of an example according to an embodiment of the present invention. As shown in FIG. 5, the example specifically includes the following steps.

510. An AP stores a STA identifier.

The AP receives the STA identifier and locally stores the STA identifier, so as to ensure that the STA identifier is not lost after the AP is powered off or restarted. For a manner of receiving the STA identifier by the AP, refer to the described manner in the embodiment shown in FIG. 3.

520. The AP sends a beacon frame at an interval of a preset period, where the beacon frame carries indication information indicating that the AP supports automatic triggering of establishing a wireless local area network connection.

530. The STA scans a service set identifier (Service Set Identifier, SSID). Specifically, the STA receives the beacon frame sent by the AP, and determines, based on the identified beacon frame, the AP that supports automatic triggering of establishing a wireless local area network connection. The STA may scan the SSID to detect surrounding APs. A specific manner may be scanning the beacon frame sent by the AP.

The STA is powered on, and if the current STA does not access any AP, the STA automatically scans a surrounding AP signal, and identifies, by parsing a management frame of an AP, an AP that supports automatic triggering of a WSC protocol.

540. The STA sends a probe request frame to the AP, where the probe request frame carries an identifier of the STA, and the probe request frame is used to request to establish a wireless local area network connection.

The STA identifies the AP that supports automatic triggering of the WSC protocol and sends the probe request (Probe Request) frame to the AP to request to perform WSC automatic triggering. The STA fills an extended IE of the probe request frame with a DEVICE ID of the STA and a MAC address of the AP that is to be connected, and sends the probe request frame to the AP for validity check. The DEVICE ID is mainly used for identity authentication, and the MAC address of the AP is mainly used for addressing, so that the probe request frame can be correctly sent to the AP that is to be connected.

550. The AP matches the identifier of the STA carried in the received probe request frame with the locally stored STA identifier.

For a specific process of matching, refer to the description in S330 in the embodiment shown in FIG. 3.

560. When the identifier of the STA carried in the probe request frame matches the locally stored STA identifier, the AP sends a probe response frame to the STA, where the probe response frame carries the locally stored STA identifier.

The probe response frame further carries a MAC address of the STA.

570. The STA starts a WSC process when determining, based on the locally stored STA identifier carried in the probe response frame, that the AP is valid.

The STA receives the probe response frame of the AP, parses a WSC automatic triggering IE, detects that a STA physical address carried in the IE is a physical address of the STA, and determines validity of the AP based on the DEVICE ID, that is, determines whether the DEVICE ID carried in the probe response frame is the DEVICE ID of the STA. If the DEVICE ID carried in the probe response frame is the DEVICE ID of the STA, it is considered that the AP is valid. If the DEVICE ID carried in the probe response frame is not the DEVICE ID of the STA, it is considered that the AP is invalid. When determining that the AP is valid, the STA automatically triggers a WSC registrar protocol, and completes WSC interaction with the AP.

580. The AP performs WSC negotiation with the STA and establishes a wireless local area network connection.

The STA actively initiates a connection based on Wi-Fi configuration generated in a WSC registrar process to establish a link connection to the AP.

For the WSC negotiation and establishment of a wireless local area network connection, refer to IEEE 802.11 and a procedure in a Wi-Fi Alliance WSC standard, but this is not limited herein.

It should be noted that the AP may store one or more STA identifiers in 510. For example, in a scenario of a wireless local area network constituted by smart households, one AP probably needs to provide wireless access services for a plurality of smart household devices. The AP may store one or more STA identifiers of the plurality of smart households in batches, and then perform step 520 to step 580, so that the AP can separately establish a wireless local area network connection to the one or more STAs in the plurality of smart households.

Specifically, in a process of performing step 520 to step 580, the AP may receive one or more probe request frames. The one or more probe request frames respectively carry different STA identifiers. In other words, there may be one or more STAs that need to establish a wireless local area network connection to the AP, and the one or more STAs send the probe request frames to the AP.

The AP matches the received one or more STA identifiers with the locally stored one or more STA identifiers.

The AP establishes a wireless local area network connection to one or more STAs corresponding to one or more STA identifiers that are successfully matched in the received one or more STA identifiers. The successful match means that it is determined, through matching the received STA identifier with the locally stored STA identifier, that a STA identifier that is the same as the received STA identifier is locally stored.

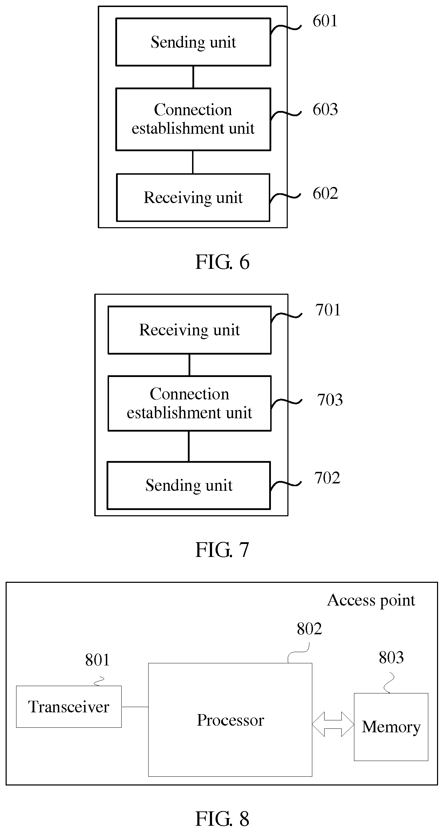

FIG. 6 is a schematic structural diagram of an apparatus for establishing a wireless local area network connection according to an embodiment of the present invention. The apparatus locally stores a station identifier, and the apparatus includes:
a sending unit 601, configured to send a beacon frame, where the beacon frame indicates that the access point supports automatic triggering of establishing a wireless local area network connection;
a receiving unit 602, configured to: receive a probe request frame sent by one or more first stations, and determine whether the identifier of at least one station includes an identifier of the one or more first stations, where the probe request frame carries the identifier of the one or more first stations, and the probe request frame is used to request to establish a wireless local area network connection; and
a connection establishment unit 603, configured to: if the identifier of the at least one station includes the identifier of the one or more first stations, establish a wireless local area network connection to the one or more first stations according to a registrar protocol of Wi-Fi Simple Configuration WSC.

Optionally, the sending unit 601 is further configured to send a probe response frame to the one or more first stations, where the probe response frame carries the identifier of the one or more first stations, and the probe response frame is used to instruct the one or more first stations to trigger establishment of a wireless local area network connection.

Optionally, the beacon frame includes a WSC information element IE. The WSC IE includes the identifier of the one or more first stations, and the WSC IE indicates that the access point supports automatic triggering of establishing a wireless local area network connection.

FIG. 7 is a schematic structural diagram of another apparatus for establishing a wireless local area network connection according to an embodiment of the present invention. As shown in FIG. 7, the apparatus specifically includes:
a receiving unit 701, configured to receive a beacon frame sent by an access point, where the beacon frame indicates that the access point supports automatic triggering of establishing a wireless local area network connection; and
a sending unit 702, configured to send a probe request frame to the access point, where the probe request frame carries an identifier of a first station, and the probe request frame is used to request to establish a wireless local area network connection, so that the access point establishes a wireless local area network connection to the first station according to a registrar protocol of Wi-Fi Simple Configuration WSC if an identifier of at least one station locally stored by the access point includes the identifier of the first station.

Optionally, the receiving unit 701 is further configured to receive a probe response frame sent by the access point, where the probe response frame carries an identifier of a second station, and the probe response frame is used to instruct the second station to trigger establishment of a wireless local area network connection.

The connection establishment unit 703 is configured to: if the identifier of the second station carried in the probe response frame matches the identifier of the first station, establish the wireless local area network connection between the access point and the first station according to the registrar protocol of Wi-Fi Simple Configuration WSC.

Optionally, the probe response frame includes a first WSC information element IE, and the first WSC IE includes the identifier of the second station.

Optionally, the probe request frame includes a second WSC IE, and the second WSC IE includes the identifier of the first station.

FIG. 8 is a schematic structural diagram of an access point according to an embodiment of the present invention. As shown in FIG. 8, the access point includes a transceiver 801, a processor 802, and a memory 803. The units may be connected by using a bus (not shown in the figure, but a person skilled in the art should know that).

The transceiver 801 may include a receiver and a transmitter, or may be a circuit that integrates a receiving function and a sending function to enable the transceiver 801 to perform wireless communication with a station. The memory 803 is configured to store program code and data, for example, a station identifier. The processor 802 performs, based on a program instruction stored in the memory 803, the operation steps of the access point in the embodiments shown in FIG. 3 to FIG. 5.

In addition, in the apparatus described in FIG. 6, the functions of the receiving unit and the sending unit may be implemented by the transceiver in this embodiment of the present invention, and the function of the connection establishment unit is implemented by the processor in this embodiment of the present invention.

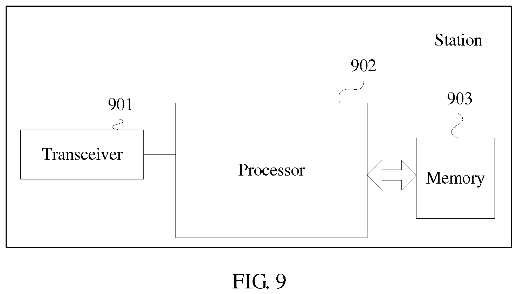

FIG. 9 is a schematic structural diagram of a station according to an embodiment of the present invention. As shown in FIG. 9, the station may include a transceiver 901, a processor 902, and a memory 903. The processor 902, the transceiver 901, and the memory 903 may be connected and communicate with each other by using a bus (not shown in the figure, but a person skilled in the art should know that). The transceiver 901 is configured to perform wireless communication with an access point, and may include a receiving unit and a sending unit. The memory 903 is configured to store a program and data. The processor 902 implements the function of the station in the embodiments shown in FIG. 3 to FIG. 5 by executing the program stored in the memory 903.

In addition, in the apparatus described in FIG. 7, the functions of the receiving unit and the sending unit may be implemented by the transceiver in this embodiment of the present invention, and the function of the connection establishment unit is implemented by the processor in this embodiment of the present invention.

It should be noted that herein the processor described in FIG. 8 and FIG. 9 may be one processor, or may be a collective term of a plurality of processing elements. For example, the processor may be a central processing unit (Central Processing Unit, CPU), may be an application-specific integrated circuit (Application Specific Integrated Circuit, ASIC), or may be one or more integrated circuits configured to implement the embodiments of the present invention.

The memory may be one storage apparatus, or may be a collective term of a plurality of storage elements, and is configured to store executable program code, or a parameter, data, or the like required by an access network management device for running. In addition, the memory 603 may include a random access memory (random access memory, RAM), or may include a non-volatile memory (non-volatile memory) such as a disk memory or a flash memory (Flash). The processor and the memory may be integrated into a processing circuit.

An embodiment of the present invention provides a Wi-Fi network system, and the system includes an access point and a station. The access point and the station in the system are respectively configured to perform the operational steps corresponding to the access point and the station in the embodiments shown in FIG. 3 to FIG. 5.

Further, a network management system in the system may use an implementation of a network management system in the embodiment shown in FIG. 8, and a GNE may use an implementation of a GNE in the embodiment shown in FIG. 7.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person of ordinary skill in the art may understand that all or some of the steps in each of the foregoing method of the embodiments may be implemented by a program instructing a processor. The foregoing program may be stored in a computer readable storage medium. The storage medium may be a non-transitory medium, such as a random-access memory, read-only memory, a flash memory, a hard disk, a solid state drive, a magnetic tape (English: magnetic tape), a floppy disk (English: floppy disk), an optical disc (English: optical disc), or any combination thereof.

Therefore, the protection scope of the present invention shall be subject to the protection scope of the claims.

## Claims

1. A method for establishing a wireless local area network connection, wherein an access point locally stores an identifier of at least one station, and the method comprises:
sending (S310, S520), by the access point, a beacon frame, wherein the beacon frame indicates that the access point supports automatic triggering of establishing a wireless local area network connection;
receiving (S320, S540), by the access point, a probe request frame sent by a first station, and determining, by the access point, whether the identifier of the at least one station comprises an identifier of the first station, wherein the probe request frame carries the identifier of the first station, and the probe request frame is used to request to establish a wireless local area network connection; and
if the identifier of the at least one station comprises the identifier of the first station, establishing (S330, S450, S580), by the access point, a wireless local area network connection to the first station according to a registrar protocol of Wi-Fi Simple Configuration, WSC.

2. The method according to claim 1, before the establishing (S330, S450, S580), by the access point, a wireless local area network connection to the first station according to a registrar protocol of Wi-Fi Simple Configuration, WSC, the method further comprises:
sending (S440, S560), by the access point, a probe response frame to the first station, wherein the probe response frame carries the identifier of the first station, and the probe response frame is used to instruct the first station to trigger establishment of a wireless local area network connection to the access point according to a registrar protocol of Wi-Fi Simple Configuration, WSC.

3. The method according to claim 1 or 2, wherein the beacon frame comprises a WSC information element, IE, the WSC information element IE comprises the identifier of the first station, and the WSC information element IE indicates that the access point supports automatic triggering of establishing a wireless local area network connection.

4. An access point for establishing a wireless local area network connection, wherein the access point locally stores a station identifier, and the access point comprises:
a sending unit (601), configured to send a beacon frame, wherein the beacon frame indicates that the access point supports automatic triggering of establishing a wireless local area network connection;
a receiving unit (602), configured to: receive a probe request frame sent by a first station, and determine whether the station identifier of at least one station comprises an identifier of the first station, wherein the probe request frame carries the identifier of the first station, and the probe request frame is used to request to establish a wireless local area network connection; and
a connection establishment unit (603), configured to: when the identifier of the at least one station comprises the identifier of the first station, establish a wireless local area network connection to the first station according to a registrar protocol of Wi-Fi Simple Configuration WSC.

5. The access point according to claim 4, wherein the sending unit (601) is further configured to: when the identifier of the at least one station comprises the identifier of the first station and before establishing by the connection establishment unit (603) a wireless local area network connection to the first station according to a registrar protocol of Wi-Fi Simple Configuration, WSC, send a probe response frame to the first station, wherein the probe response frame carries the identifier of the first station, and the probe response frame is used to instruct the first station to trigger establishment of a wireless local area network connection to the access point according to a registrar protocol of Wi-Fi Simple Configuration, WSC.

6. The access point according to claim 4 or 5, wherein the beacon frame comprises a WSC information element IE, the WSC information element IE comprises the identifier of the first station, and the WSC IE indicates that the access point supports automatic triggering of establishing a wireless local area network connection.

7. A wireless local area network system comprises an access point and a first station, wherein the access point locally stores an identifier of at least one station;
the access point is configured to send a beacon frame, wherein the beacon frame indicates that the access point supports automatic triggering of establishing a wireless local area network connection;
the first station is configured to receive the beacon frame, and when determining, based on the indication information carried in the beacon frame, that the access point supports automatic triggering of establishing a wireless local area network connection, send a probe request frame to the access point, wherein the probe request frame carries an identifier of the first station, and the probe request frame is used to request to establish a wireless local area network connection;
the access point is configured to receive the probe request frame, determine whether the identifier of the at least one station comprises the identifier of the first station carried in the probe request frame, and if the identifier of the at least one station comprises the identifier of the first station carried in the probe request frame, establish a wireless local area network connection to the first station according to a registrar protocol of Wi-Fi Simple Configuration, WSC.

## Patentansprüche

1. Verfahren zum Herstellen einer drahtlosen lokalen Netzwerkverbindung, wobei ein Zugangspunkt einen Bezeichner von wenigstens einer Station lokal speichert, und das Verfahren Folgendes umfasst:
Senden (S310, S520), durch den Zugangspunkt, eines Beacon-Rahmens, wobei der Beacon-Rahmen anzeigt, dass der Zugangspunkt ein automatisches Auslösen eines Herstellens einer drahtlosen lokalen Netzwerkverbindung unterstützt;
Empfangen (S320, S540), durch den Zugangspunkt, eines Prüfanforderungsrahmens, der durch eine erste Station gesendet wird, und Bestimmen, durch den Zugangspunkt, ob der Bezeichner der wenigstens einen Station einen Bezeichner der ersten Station umfasst, wobei der Prüfanforderungsrahmen den Bezeichner der ersten Station trägt und der Prüfanforderungsrahmen genutzt wird, um anzufordern, eine drahtlose lokale Netzwerkverbindung herzustellen; und
falls der Bezeichner der wenigstens einen Station den Bezeichner der ersten Station umfasst, Herstellen (S330, S450, S580), durch den Zugangspunkt, einer drahtlosen lokalen Netzwerkverbindung zu der ersten Station gemäß einem Registrierstellenprotokoll einer Wi-Fi-Einfachkonfiguration (*Wi-Fi Simple Configuration* - WSC).

2. Verfahren nach Anspruch 1, wobei vor dem Herstellen (S330, S450, S580), durch den Zugangspunkt, einer drahtlosen lokalen Netzwerkverbindung zu der ersten Station gemäß einem Registrierstellenprotokoll einer Wi-Fi-Einfachkonfiguration (WSC) das Verfahren ferner Folgendes umfasst:
Senden (S440, S560), durch den Zugangspunkt, eines Prüfantwortrahmens zu der ersten Station, wobei der Prüfantwortrahmen den Bezeichner der ersten Station trägt und der Prüfantwortrahmen genutzt wird, um die erste Station anzuweisen, den Aufbau einer drahtlosen lokalen Netzwerkverbindung zu dem Zugangspunkt gemäß einem Registrierstellenprotokoll einer Wi-Fi-Einfachkonfiguration (WSC) auszulösen.

3. Verfahren nach Anspruch 1 oder 2, wobei der Beacon-Rahmen ein WSC-Informationselement (IE) umfasst, das WSC-Informationselement (IE) den Bezeichner der ersten Station umfasst und das WSC-Informationselement (IE) anzeigt, dass der Zugangspunkt ein automatisches Auslösen eines Herstellens einer drahtlosen lokalen Netzwerkverbindung unterstützt.

4. Zugangspunkt zum Herstellen einer drahtlosen lokalen Netzwerkverbindung, wobei der Zugangspunkt einen Stationsbezeichner lokal speichert und der Zugangspunkt Folgendes umfasst:
eine Sendeeinheit (601), die konfiguriert ist, um einen Beacon-Rahmen zu senden, wobei der Beacon-Rahmen anzeigt, dass der Zugangspunkt ein automatisches Auslösen eines Herstellens einer drahtlosen lokalen Netzwerkverbindung unterstützt; eine Empfangseinheit (602), die zu Folgendem konfiguriert ist: Empfangen eines Prüfanforderungsrahmens, der durch eine erste Station gesendet wird, und Bestimmen, ob der Stationsbezeichner wenigstens einer Station einen Bezeichner der ersten Station umfasst, wobei der Prüfanforderungsrahmen den Bezeichner der ersten Station trägt und der Prüfanforderungsrahmen genutzt wird, um anzufordern, eine drahtlose lokale Netzwerkverbindung herzustellen; und
eine Verbindungsherstellungseinheit (603), die zu Folgendem konfiguriert ist: wenn der Bezeichner der wenigstens einen Station den Bezeichner der ersten Station umfasst, Herstellen einer drahtlosen lokalen Netzwerkverbindung zu der ersten Station gemäß einem Registrierstellenprotokoll einer Wi-Fi-Einfachkonfiguration (WSC).

5. Zugangspunkt nach Anspruch 4, wobei die Sendeeinheit (601) ferner zu Folgendem konfiguriert ist: wenn der Bezeichner der wenigstens einen Station den Bezeichner der ersten Station umfasst, und vor dem Herstellen einer drahtlose lokale Netzwerkverbindung durch die Verbindungsherstellungseinheit (603) zu der ersten Station gemäß einem Registrierstellenprotokoll einer Wi-Fi-Einfachkonfiguration (WSC),
Senden eines Prüfantwortrahmens zu der ersten Station, wobei der Prüfantwortrahmen den Bezeichner der ersten Station trägt und der Prüfantwortrahmen genutzt wird, um die erste Station anzuweisen, den Aufbau einer drahtlosen lokalen Netzwerkverbindung zu dem Zugangspunkt gemäß einem Registrierstellenprotokoll einer Wi-Fi-Einfachkonfiguration (WSC) auszulösen.

6. Zugangspunkt nach Anspruch 4 oder 5, wobei der Beacon-Rahmen ein WSC-Informationselement (IE) umfasst, das WSC-Informationselement (IE) den Bezeichner der ersten Station umfasst und das WSC-IE anzeigt, dass der Zugangspunkt ein automatisches Auslösen eines Herstellens einer drahtlosen lokalen Netzwerkverbindung unterstützt.

7. Drahtloses lokales Netzwerksystem, das einen Zugangspunkt und eine erste Station umfasst,
wobei der Zugangspunkt einen Bezeichner wenigstens einer Station lokal speichert; der Zugangspunkt konfiguriert ist, um einen Beacon-Rahmen zu senden, wobei der Beacon-Rahmen anzeigt, dass der Zugangspunkt ein automatisches Auslösen eines Herstellens einer drahtlosen lokalen Netzwerkverbindung unterstützt;
die erste Station konfiguriert ist, um den Beacon-Rahmen zu empfangen und wenn, basierend auf den Anzeigeinformationen, die in dem Beacon-Rahmen getragen werden, bestimmt wird, dass der Zugangspunkt ein automatisches Auslösen eines Herstellens einer drahtlosen lokalen Netzwerkverbindung unterstützt, einen Prüfanforderungsrahmen an den Zugangspunkt zu senden, wobei der Prüfanforderungsrahmen einen Bezeichner der ersten Station trägt und der Prüfanforderungsrahmen genutzt wird, um anzufordern, eine drahtlose lokale Netzwerkverbindung herzustellen;
der Zugangspunkt konfiguriert ist, um den Prüfanforderungsrahmen zu empfangen, zu bestimmen, ob der Bezeichner der wenigstens einen Station den Bezeichner der ersten Station umfasst, der in dem Prüfanforderungsrahmen getragen wird, und wenn der Bezeichner der wenigstens einen Station den Bezeichner der ersten Station umfasst, der in dem Prüfanforderungsrahmen getragen wird, eine drahtlose lokale Netzwerkverbindung zu der ersten Station gemäß einem Registrierstellenprotokoll einer Wi-Fi-Einfachkonfiguration (WSC) herzustellen.

## Revendications

1. Procédé d'établissement de connexion de réseau local sans fil, un point d'accès stockant localement un identifiant d'au moins une station, et le procédé comprenant :
l'envoi (S310, S520), par le point d'accès, d'une trame de balise, la trame de balise indiquant que le point d'accès prend en charge le déclenchement automatique de l'établissement d'une connexion de réseau local sans fil ;
la réception (S320, S540), par le point d'accès, d'une trame de demande d'essai envoyée par une première station, et la détermination, par le point d'accès, du fait de savoir si l'identifiant de l'au moins une station comprend un identifiant de la première station, la trame de demande d'essai portant l'identifiant de la première station, et la trame de demande d'essai étant utilisée pour demander à établir une connexion de réseau local sans fil ; et
si l'identifiant de l'au moins une station comprend l'identifiant de la première station, l'établissement (S330, S450, S580), par le point d'accès, d'une connexion de réseau local sans fil à la première station selon un protocole de registraire de Wi-Fi Simple Configuration, WSC.

2. Procédé selon la revendication 1, le procédé comprenant en outre, avant l'établissement (S330, S450, S580), par le point d'accès, d'une connexion de réseau local sans fil à la première station selon un protocole de registraire de Wi-Fi Simple Configuration, WSC :
l'envoi (S440, S560), par le point d'accès, d'une trame de réponse d'essai à la première station, la trame de réponse d'essai portant l'identifiant de la première station, et la trame de réponse d'essai étant utilisée pour donner instruction à la première station de déclencher l'établissement d'une connexion de réseau local sans fil au point d'accès selon un protocole de registraire de Wi-Fi Simple Configuration, WSC.

3. Procédé selon la revendication 1 ou 2, la trame de balise comprenant un élément d'information, IE, de WSC, l'élément d'information IE de WSC comprenant l'identifiant de la première station, et l'élément d'information IE de WSC indiquant que le point d'accès prend en charge le déclenchement automatique de l'établissement d'une connexion de réseau local sans fil.

4. Point d'accès permettant d'établir une connexion de réseau local sans fil, le point d'accès stockant localement un identifiant de station, et le point d'accès comprenant :
une unité d'envoi (601), configurée pour envoyer une trame de balise, dans laquelle la trame de balise indique que le point d'accès prend en charge le déclenchement automatique de l'établissement d'une connexion de réseau local sans fil ;
une unité de réception (602), configurée pour : recevoir une trame de demande d'essai envoyée par une première station, et déterminer si l'identifiant de station d'au moins une station comprend un identifiant de la première station, la trame de demande d'essai portant l'identifiant de la première station, et la trame de demande d'essai étant utilisée pour demander à établir une connexion de réseau local sans fil ; et
une unité (603) d'établissement de connexion, configurée pour : lorsque l'identifiant de l'au moins une station comprend l'identifiant de la première station, établir une connexion de réseau local sans fil à la première station selon un protocole de registraire de Wi-Fi Simple Configuration, WSC.

5. Point d'accès selon la revendication 4, dans lequel l'unité d'envoi (601) est en outre configurée pour : lorsque l'identifiant de l'au moins une station comprend l'identifiant de la première station et avant l'établissement par l'unité (603) d'établissement de connexion d'une connexion de réseau local sans fil à la première station selon un protocole de registraire de Wi-Fi Simple Configuration, WSC, envoyer une trame de réponse d'essai à la première station, la trame de réponse d'essai portant l'identifiant de la première station, et la trame de réponse d'essai étant utilisée pour donner instruction à la première station de déclencher l'établissement d'une connexion de réseau local sans fil au point d'accès selon un protocole de registraire de Wi-Fi Simple Configuration, WSC.

6. Point d'accès selon la revendication 4 ou 5, la trame de balise comprenant un élément d'information, IE, de WSC, l'élément d'information IE de WSC comprenant l'identifiant de la première station, et l'IE de WSC indiquant que le point d'accès prend en charge le déclenchement automatique de l'établissement d'une connexion de réseau local sans fil.

7. Système de réseau local sans fil comprenant un point d'accès et une première station, le point d'accès stockant localement un identifiant d'au moins une station ;
le point d'accès étant configuré pour envoyer une trame de balise, la trame de balise indiquant que le point d'accès prend en charge le déclenchement automatique de l'établissement d'une connexion de réseau local sans fil ;
la première station étant configurée pour recevoir la trame de balise et, lorsqu'elle détermine, en fonction des informations d'indication portées dans la trame de balise, que le point d'accès prend en charge le déclenchement automatique de l'établissement d'une connexion de réseau local sans fil, envoyer une trame de demande d'essai au point d'accès, la trame de demande d'essai portant un identifiant de la première station, et la trame de demande d'essai étant utilisée pour demander à établir une connexion de réseau local sans fil ;
le point d'accès étant configuré pour recevoir la trame de demande d'essai, déterminer si l'identifiant de l'au moins une station comprend l'identifiant de la première station portée dans la trame de demande d'essai et, si l'identifiant de l'au moins une station comprend l'identifiant de la première station portée dans la trame de demande d'essai, établir une connexion de réseau local sans fil à la première station selon un protocole de registraire de Wi-Fi Simple Configuration, WSC.
